(19) Europäisches Patentamt
European Patent Office
Office européen des brevets

(11) **EP 3 851 467 A1**

(12) **EUROPEAN PATENT APPLICATION**
published in accordance with Art. 153(4) EPC

(43) Date of publication:
**21.07.2021 Bulletin 2021/29**

(51) Int Cl.:
*C08G 18/00* (2006.01)    *C08J 5/04* (2006.01)
*C08J 9/02* (2006.01)    *C08K 7/14* (2006.01)
*C08K 7/18* (2006.01)    *C08L 75/04* (2006.01)
*E01B 3/44* (2006.01)

(21) Application number: 18933433.7

(22) Date of filing: 14.09.2018

(86) International application number:
**PCT/JP2018/034201**

(87) International publication number:
**WO 2020/054056 (19.03.2020 Gazette 2020/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: SEKISUI CHEMICAL CO., LTD.
**Osaka-shi
Osaka
530-8565 (JP)**

(72) Inventors:
• **TANABE, Tomoaki**
  **Kyoto-shi, Kyoto 601-8105 (JP)**
• **NISHIJIMA, Satoshi**
  **Kyoto-shi, Kyoto 601-8105 (JP)**

(74) Representative: **Ter Meer Steinmeister & Partner
Patentanwälte mbB
Nymphenburger Straße 4
80335 München (DE)**

(54) **CURABLE RESIN COMPOSITION, RESIN MOLDED BODY AND METHOD FOR PRODUCING RESIN MOLDED BODY**

(57)    There is provided a curable resin composition capable of obtaining a resin molded body that is excellent in wear resistance and has a high flexural modulus. The curable resin composition according to the present invention contains a polyol compound, an isocyanate compound, a long reinforcing fiber, and a filler, in which the specific gravity of the filler is less than 4 and the average circularity of the filler is 0.65 or more.

[FIG. 1.]

## Description

### TECHNICAL FIELD

The present invention relates to a curable resin composition containing a polyol compound and an isocyanate compound. The present invention also relates to a resin molded body containing a urethane resin and a method for producing the resin molded body.

### BACKGROUND ART

In recent years, resin molded bodies may have been be used as structural materials, such as building materials, instead of wood, etc. For example, resin molded crossties may be used as railroad crossties instead of wooden crossties and concrete crossties.

Although crossties made of a resin molded body are less likely to corrode than wooden crossties and concrete crossties, they may be inferior in bending characteristics. Fillers or glass fibers may be compounded into a resin molded body in order to improve the bending characteristics of the resin molded body.

As an example of such a resin molded body, the following Patent Document 1 discloses a resin molded body obtained by molding a resin composition containing 1% by weight to 15% by weight of glass fiber and 30% by weight to 85% by weight of fly ash having a diameter distribution of 5 $\mu$m to 200 $\mu$m. In the example of Patent Document 1, the resin molded body is produced in a way in which: the resin composition is prepared by mixing a polyol compound, an isocyanate compound, a filler, a glass fiber, and a catalyst in an extruder; and then the resin composition is pressure-extruded into a mold via an extruder head.

The following Patent Document 2 discloses a fiber reinforced resin molded article (resin molded body) formed by foaming and curing a urethane resin composition. The urethane resin composition contains a urethane resin component, a long glass fiber, and a filler having a specific gravity of 4.0 or more. In Patent Document 1, the content of the filler having a specific gravity of 4.0 or more is 15 parts by weight to 70 parts by weight based on 100 parts by weight of the urethane resin component.

The following Patent Document 3 discloses a foamed urethane resin molded article whose longitudinal direction is reinforced with long glass fibers. The front surface layer or the back surface layer of the foamed urethane resin molded article contains a urethane resin foam and a solid filler.

### Related Art Documents

#### Patent Documents

Patent Document 1: WO 2007/014332 A2
Patent Document 2: JP 2003-41013 A
Patent Document 3: JP 2001-246632 A

## SUMMARY OF THE INVENTION

### PROBLEMS TO BE SOLVED BY THE INVENTION

If the flexural modulus of a resin molded body is small, the resin molded body is likely to bend, so it is difficult to keep the initial shape. Therefore, when a resin molded body having a small flexural modulus is used as, for example, a crosstie, the crosstie may be bent by the load of a loaded object.

Additionally, a resin molded body used outdoors may be worn due to contact with surrounding stones, gravel, etc. For example, when a resin molded body is used as a railroad crosstie, the crosstie is brought into contact with ballast due to vibration when trains pass, so the crosstie is more likely to be worn.

In the resin molded body described in Patent Document 1, the content of the glass fiber is as small as 1% by weight to 15% by weight, and hence the resin molded body may be bent when used as a crosstie. Additionally, in the method for producing a resin molded body described in Patent Document 1, even if it is intended to increase the length of the glass fiber in order to enhance the flexural modulus of the resin molded body, the glass fiber may be cut or the glass fibers may be entangled with each other in an extruder, so that it is difficult to obtain a resin molded body itself by extrusion molding.

In the urethane resin composition described in Patent Document 2, a filler having a large specific gravity is used, and hence the filler is likely to precipitate in the urethane resin composition, and a portion between the long glass fibers is less likely to be impregnated with the fillers when a resin molded body is formed. Therefore, with the urethane resin composition described in Patent Document 2, it is difficult to obtain a resin molded body in which fillers are uniformly dispersed, so that a flexural modulus is likely to decrease, and wear resistance is also likely to decrease.

Patent Document 3 describes that the specific gravity of the solid filler contained in a foamed urethane resin molded article and in the material of the foamed urethane resin molded article (urethane resin composition) is preferably 1.5 or more and 5.4 or less. However, Patent Document 3 does not describe any difference in flexural modulus between the case where the specific gravity of the solid filler is less than 4 and the case where the specific gravity is 4 or more. Additionally, in the example of Patent Document 3, the grinding dust of the foamed urethane resin molded article or silica sand #7 is simply used as the solid filler. Since the circularity of the grinding dust of a foamed urethane resin molded article or of silica sand #7 is generally small, stirring resistance, occurring when a urethane resin composition containing these fillers is mixed, is increased due to the corner portions of the grinding dust or the silica sand #7. So, the viscosity of the urethane resin composition is likely to rise, and the fillers are less likely to be uniformly dispersed in the urethane resin composition. Therefore, with the urethane resin composition described in Patent Document 3, it is difficult to obtain a resin molded body in which fillers are uniformly dispersed, so that a flexural modulus is likely to decrease, and wear resistance is also likely to decrease.

In particular, in a resin molded body as described in Patent Documents 2 and 3, in which fillers are not uniformly dispersed in the resin molded body and there are areas where the filler does not exist and areas where the filler exists, wear resistance is poor in the areas where the filler does not exist. Therefore, when this resin molded body is used as a crosstie, the crosstie is easily scraped when brought into contact with ballast, so that it is difficult to maintain the performance as a crosstie.

An object of the present invention is to provide a curable resin composition capable of obtaining a resin molded body that is excellent in wear resistance and has a high flexural modulus. Another object of the present invention is to provide a resin molded body using the curable resin composition and a method for producing the resin molded body.

## MEANS FOR SOLVING THE PROBLEMS

According to a broad aspect of the present invention, there is provided a curable resin composition that contains a polyol compound, an isocyanate compound, a long reinforcing fiber, and a filler, in which the specific gravity of the filler is less than 4 and the average circularity of the filler is 0.65 or more.

In a specific aspect of the curable resin composition according to the present invention, the average equivalent circle diameter of the filler is 1 $\mu$m or more and 15 $\mu$m or less.

In a particular aspect of the curable resin composition according to the present invention, the content of the filler is 40 parts by weight or more and 240 parts by weight or less based on 100 parts by weight of the total of the polyol compound and the isocyanate compound.

In a specific aspect of the curable resin composition according to the present invention, the filler is fly ash.

In a specific aspect of the curable resin composition according to the present invention, the fiber length of the long reinforcing fiber is 50 mm or more.

In a specific aspect of the curable resin composition according to the present invention, the content of the long reinforcing fiber is 40 parts by weight or more and 380 parts by weight or less based on 100 parts by weight of the total of the polyol compound and the isocyanate compound.

In a specific aspect of the curable resin composition according to the present invention, the long reinforcing fiber is a long glass fiber.

In a specific aspect of the curable resin composition according to the present invention, the curable resin composition contains a foaming agent.

According to a broad aspect of the present invention, there is provided a resin molded body that contains a urethane resin, a long reinforcing fiber, and a filler, in which the specific gravity of the filler is less than 4 and the average circularity of the filler is 0.65 or more.

In a specific aspect of the resin molded body according to the present invention, the average equivalent circle diameter of the filler is 1 $\mu$m or more and 15 $\mu$m or less.

In a specific aspect of the resin molded body according to the present invention, the filler is fly ash.

In a specific aspect of the resin molded body according to the present invention, the volume content of the filler is 6% by volume or more and 30% by volume or less in 100% by volume of the resin molded body.

In a specific aspect of the resin molded body according to the present invention, the volume content of the long reinforcing fiber is 6% by volume or more and 25% by volume or less in 100% by volume of the resin molded body.

In a specific aspect of the resin molded body according to the present invention, the fiber length of the long reinforcing fiber is 50 mm or more.

In a specific aspect of the resin molded body according to the present invention, the long reinforcing fiber is a long glass fiber.

In a specific aspect of the resin molded body according to the present invention, the expansion ratio of the urethane resin is 1.1 times or more and 5 times or less.

It is preferable that the resin molded body according to the present invention is a crosstie.

According to a broad aspect of the present invention, there is provided a method for producing the above-described resin molded article, the method including the steps of: mixing a polyol compound, an isocyanate compound, and a filler to obtain a first composition; impregnating a portion between long reinforcing fibers with the first composition to obtain a curable resin composition; and curing the curable resin composition in a mold, in which the specific gravity of the filler is less than 4 and the average circularity of the filler is 0.65 or more.

In a specific aspect of the method for producing the resin molded body according to the present invention, the average equivalent circle diameter of the filler is 1 $\mu$m or more and 15 $\mu$m or less.

In a specific aspect of the method for producing the resin molded body according to the present invention, the polyol compound, the isocyanate compound, and the filler are mixed, in the mixing step, such that the content of the filler is set to 40 parts by weight or more and 240 parts by weight or less based on 100 parts by weight of the total of the polyol compound and the isocyanate compound.

In a specific aspect of the method for producing the resin molded body according to the present invention, the filler is fly ash.

In a specific aspect of the method for producing the resin molded body according to the present invention, the fiber length of the long reinforcing fiber is 50 mm or more.

In a specific aspect of the method for producing the resin molded body according to the present invention, the portion between the long reinforcing fibers is impregnated, in the impregnation step, with the first composition such that the content of the long reinforcing fiber is set to 20 parts by weight or more and 150 parts by weight or less based on 100 parts by weight of the first composition.

In a specific aspect of the method for producing the resin molded body according to the present invention, the long reinforcing fiber is a long glass fiber.

In a specific aspect of the method for producing the resin molded body according to the present invention, the first composition contains a foaming agent, so that in the curing step, the curable resin composition is foamed and cured in a mold.

In a specific aspect of the method for producing the resin molded body according to the present invention, it is preferable that the obtained resin molded body is a crosstie.

## EFFECT OF THE INVENTION

The curable resin composition according to the present invention contains a polyol compound, an isocyanate compound, a long reinforcing fiber, and a filler, in which the specific gravity of the filler is less than 4 and the average circularity of the filler is 0.65 or more. Therefore, the curable resin composition is capable of obtaining a resin molded body that is excellent in wear resistance and has a high flexural modulus.

The resin molded body according to the present invention contains a urethane resin, a long reinforcing fiber, and a filler, in which the specific gravity of the filler is less than 4 and the average circularity of the filler is 0.65 or more. Therefore, the resin molded body is excellent in wear resistance and has a high flexural modulus.

## BRIEF DESCRIPTION OF DRAWINGS

[Fig. 1] Fig. 1 is a cross-sectional view schematically showing a resin molded body according to a first embodiment of the present invention.

[Fig. 2] Fig. 2 is a view showing a filler, a circle having the same area as the projected area of the filler, and an equivalent circle diameter.

[Fig. 3] Fig. 3 is an electron micrograph of fly ash type I used in Examples.

[Fig. 4] Fig. 4 is an electron micrograph of fly ash type II used in Examples.

[Fig. 5] Fig. 5 is an electron micrograph of fly ash type IV used in Comparative Examples.

[Fig. 6] Fig. 6 is an electron micrograph of silica sand #7 used in Comparative Examples.

[Fig. 7] Fig. 7 is a view for explaining a method for manufacturing a resin molded body according to the first embodiment of the present invention.

**MODES FOR CARRYING OUT THE INVENTION**

Hereinafter, the present invention will be described in detail.

A curable resin composition according to the present invention contains a polyol compound, an isocyanate compound, a long reinforcing fiber, and a filler. In the curable resin composition according to the present invention, the specific gravity of the filler is less than 4, and the average circularity of the filler is 0.65 or more. The curable resin composition according to the present invention may be a curable resin-impregnated sheet.

Since the curable resin composition according to the present invention contains a filler having a specific gravity of less than 4 and an average circularity of 0.65 or more, the wear resistance of a resin molded body can be improved. Further, since the curable resin composition according to the present invention contains a long reinforcing fiber, the flexural modulus of a resin molded body can be increased.

Since the curable resin composition according to the present invention is provided with all of the above configurations, a resin molded body containing a filler and a long reinforcing fiber can be obtained, the resin molded body being excellent in wear resistance and having a high flexural modulus.

In the present invention, a filler having a particular specific gravity and a specific shape is used, and hence the filler is less likely to precipitate in the curable resin composition. Further, a filler having a large average circularity is used in the present invention, and hence the filler is less likely to resist in the curable resin composition, so that the viscosity of the curable resin composition is less likely to rise. Therefore, the filler is easily put between the long reinforcing fibers, and the fillers are likely to be uniformly dispersed in the curable resin composition. As a result, a resin molded body in which the fillers are uniformly dispersed can be obtained. Further, in the resin molded body in which the fillers are uniformly dispersed, a portion that is easily worn can be reduced, so that wear resistance can be enhanced. Therefore, with the curable resin composition according to the present invention, a resin molded body having both good wear resistance and good flexural modulus can be obtained.

Further, the curable resin composition according to the present invention is provided with all of the above configurations, and hence a resin molded body having a small variation in flexural modulus can be obtained. For example, when a plurality of resin molded bodies are obtained by using the curable resin composition according to the present invention, the uniformity of the flexural moduli among the plurality of resin molded bodies can be enhanced.

Note that a urethane resin can be obtained by reacting the polyol compound and the isocyanate compound in the presence of a urethanization catalyst.

The resin molded body according to the present invention contains a urethane resin, a long reinforcing fiber, and a filler. In the resin molded body according to the present invention, the specific gravity of the filler is less than 4, and the average circularity of the filler is 0.65 or more.

Since the resin molded body according to the present invention contains a filler having a specific gravity of less than 4 and an average circularity of 0.65 or more, wear resistance can be improved. Further, the resin molded body according to the present invention contains a long reinforcing fiber, and hence flexural modulus can be increased.

Since the resin molded body according to the present invention is provided with all of the above configurations, the resin molded body containing the filler is excellent in wear resistance and has a high flexural modulus.

The resin molded body according to the present invention can be obtained, for example, by curing the curable resin composition. Therefore, in the resin molded body according to the present invention, both wear resistance and flexural modulus can be improved.

It is difficult to improve both the wear resistance and flexural modulus of a resin molded body that does not contain a filler or a long reinforcing fiber. Even in a resin molded body that contains a filler having a specific gravity of 4 or more and an average circularity of 0.65 or more and a long reinforcing fiber, or that contains a filler having a specific gravity of less than 4 and an average circularity of less than 0.65 and a long reinforcing fiber, it is difficult to improve both wear resistance and flexural modulus. On the other hand, in a resin molded body obtained from the curable resin composition of the present invention and the resin molded body of the present invention, both wear resistance and flexural modulus can be improved.

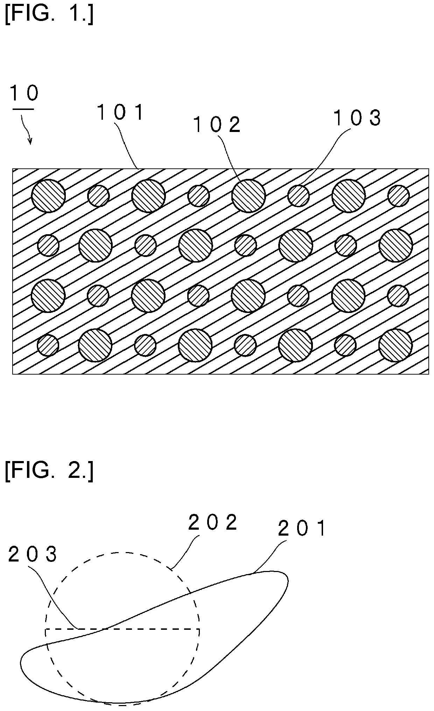

Fig. 1 is a cross-sectional view schematically showing a resin molded body according to a first embodiment of the present invention.

A resin molded body 10 shown in Fig. 1 contains a urethane resin 101, a long reinforcing fiber 102, and a filler 103. In Fig. 1, the cross section of the fiber diameter portion of the long reinforcing fiber 102 is shown.

The details, etc., of the components contained in the curable resin composition according to the present invention and the components constituting the resin molded body according to the present invention will be described below.

[Polyol compound]

A polyol compound is a compound having two or more hydroxyl groups (-OH groups).

Examples of the polyol compound contained in the curable resin composition include a polylactone polyol, polycarbonate polyol, aromatic polyol, alicyclic polyol, aliphatic polyol, polyester polyol, and polyether polyol. The polyol compound may be a polymer polyol. The polyol compounds may be used alone or in combination of two or more types.

Examples of the polylactone polyol include polypropiolactone glycol, polycaprolactone glycol, and polyvalerolactone glycol.

Examples of the polycarbonate polyol include a dealcoholization reaction product of a hydroxyl group-containing compound and a carbonate compound. Examples of the hydroxyl group-containing compound include ethylene glycol, propylene glycol, butanediol, pentanediol, hexanediol, octanediol, and nonanediol. Examples of the carbonate compound include diethylene carbonate, and dipropylene carbonate.

Examples of the aromatic polyol include bisphenol A, bisphenol F, phenol novolac, and cresol novolac.

Examples of the alicyclic polyol include cyclohexanediol, methylcyclohexanediol, isophoronediol, dicyclohexylmethanediol, and dimethyldicyclohexylmethanediol.

Examples of the aliphatic polyol include ethylene glycol, propylene glycol, butanediol, pentanediol, and hexanediol.

Examples of the polyester polyol include a dehydration condensation product of a polybasic acid and a polyhydric alcohol, a ring-opening polymer of lactone, a condensation product of a hydroxycarboxylic acid and a polyhydric alcohol. Examples of the polybasic acid include adipic acid, azelaic acid, sebacic acid, terephthalic acid, isophthalic acid, and succinic acid. Examples of the polyhydric alcohol include bisphenol A, ethylene glycol, 1,2-propylene glycol, 1,4-butanediol, diethylene glycol, 1,6-hexane glycol, and neopentyl glycol. Examples of the lactone include ε-caprolactone, and α-methyl-ε-caprolactone. Examples of the hydroxycarboxylic acid include castor oil, and a reaction product of castor oil and ethylene glycol.

Examples of the polyether polyol include a ring-opening polymer of an active hydrogen compound having two or more active hydrogen atoms and alkylene oxide. Examples of the alkylene oxide include ethylene oxide, propylene oxide, and tetrahydrofuran. It is preferable that the molecular weight of the active hydrogen compound is small. Examples of the active hydrogen compound include: diol compounds such as bisphenol A, ethylene glycol, propylene glycol, butylene glycol, and 1,6-hexanediol; triol compounds such as glycerin, and trimethylolpropane; and amine compounds such as ethylenediamine, and butylenediamine.

Examples of the polymer polyol include a graft polymer obtained by graft-polymerizing an unsaturated organic compound with a polyol compound, polybutadiene polyol, a modified polyol of polyhydric alcohol, and a hydrogenated product thereof.

Examples of the polyol compound in the graft polymer include aromatic polyol, alicyclic polyol, aliphatic polyol, polyester polyol, and polyether polyol. Examples of the unsaturated organic compound in the graft polymer include acrylonitrile, styrene, methyl acrylate, and methacrylate.

Examples of the modified polyol of polyhydric alcohol include a modified reaction product of polyhydric alcohol and alkylene oxide. Examples of the polyhydric alcohol include: trihydric alcohols such as glycerin and trimethylolpropane; alcohols with a valence of 4 or more and 8 or less such as pentaerythritol, sorbitol, mannitol, sorbitan, diglycerin, dipentaerythritol, sucrose, glucose, mannose, fructose, methylglucoside, and derivatives thereof; phenol compounds such as phenol, phloroglucin, cresol, pyrogallol, catechol, hydroquinone, bisphenol A, bisphenol F, bisphenol S, 1-hydroxynaphthalene, 1,3,6,8-tetrahydroxynaphthalene, anthrol, 1,4,5,8-tetrahydroxyanthracene, and 1-hydroxypyrene; polybutadiene polyols; castor oil polyols; (co)polymers of hydroxyalkyl (meth)acrylate; polyfunctional (e.g., 2 or more and 100 or less functional groups) polyols such as polyvinyl alcohol; and condensates (novolac) of phenol and formaldehyde. Examples of the alkylene oxide include alkylene oxides having 2 or more and 6 or less carbon atoms. Specific examples of the alkylene oxide include ethylene oxide, 1,2-propylene oxide, 1,3-propylene oxide, 1,2-butylene oxide, and 1,4-butylene oxide. From the viewpoint of improving properties and reactivity, the alkylene oxide is preferably 1,2-propylene oxide, ethylene oxide, or 1,2-butylene oxide, and more preferably 1,2-propylene oxide or ethylene oxide. The above alkylene oxides may be used alone or in combination of two or more types.

When two or more types of the alkylene oxides are used, the form of addition may be block addition, random addition, or both block addition and random addition.

From the viewpoint of enhancing the dispersibility of the filler, it is preferable that the polyol compound is a polyester polyol or a polyether polyol.

The viscosity at 12°C of the polyol compound is preferably 200 cps or more, more preferably 300 cps or more, and preferably 1000 cps or less, more preferably 800 cps or less. When the viscosity is the above lower limit or more and the above upper limit or less, the portion between the long reinforcing fibers is more likely to be impregnated with the fillers in the curable resin composition, so that the wear resistance and flexural modulus of a resin molded body can be increased.

The viscosity at 12°C can be measured by using, for example, a Brookfield viscometer.

[Isocyanate compound]

An isocyanate compound is a compound having one or more isocyanate groups (-NCO groups).

Examples of the isocyanate compound contained in the curable resin composition include aromatic polyisocyanate, alicyclic polyisocyanate, and aliphatic polyisocyanate. From the viewpoint of efficiently promoting the curing reaction, it is preferable that the isocyanate compound is a polyisocyanate compound. The isocyanate compounds may be used alone or in combination of two or more types.

Examples of the aromatic polyisocyanate include phenylene diisocyanate, tolylene diisocyanate, xylylene diisocyanate, diphenylmethane diisocyanate, dimethyl diphenylmethane diisocyanate, triphenylmethane triisocyanate, naphthalene diisocyanate, and polymethylene polyphenyl polyisocyanate.

Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate.

Examples of the aliphatic polyisocyanate include methylene diisocyanate, ethylene diisocyanate, propylene diisocyanate, tetramethylene diisocyanate, and hexamethylene diisocyanate.

It is preferable that the isocyanate compound is diphenylmethane diisocyanate, because it is easily available and is excellent in convenience.

The polyol compound and the isocyanate compound can be used in appropriate compounding amounts so as to efficiently form a urethane bond. From the viewpoint of increasing reaction efficiency, the content of the isocyanate compound is preferably 100 parts by weight or more, more preferably 120 parts by weight or more, still more preferably 130 parts by weight or more, and preferably 180 parts by weight or less, more preferably 160 parts by weight or less, still more preferably 150 parts by weight or less, based on 100 parts by weight of the polyol compound. When the content of the isocyanate compound is the above lower limit or more and the above upper limit or less, the unreacted polyol compound or the unreacted isocyanate compound becomes less, so that a resin molded body having a better flexural modulus is likely to be formed.

[Long reinforcing fiber]

A long reinforcing fiber is a reinforcing fiber and a long fiber. The reinforcing fiber is a fibrous material having a certain strength. As the reinforcing fiber, for example, a carbon fiber, glass fiber, aramid fiber, etc., are known. The fiber length of the long fiber is, for example, 50 mm or more in average fiber length. The long reinforcing fiber may be a long fiber reinforced sheet.

Examples of the long reinforcing fiber contained in the curable resin composition and the resin molded body include a long carbon fiber, long glass fiber, long aramid fiber, and long reinforcing fiber. The long reinforcing fibers may be used alone or in combination of two or more types.

From the viewpoint of further increasing flexural modulus, it is preferable that the long reinforcing fiber is a long glass fiber. The long glass fiber is a fibrous material obtained by melting glass and pulling it into a fibrous shape.

From the viewpoint of further increasing flexural modulus, the fiber length of the long reinforcing fiber is preferably 50 mm or more, and more preferably 70 mm or more. Since the long reinforcing fiber can be cut into a desired size after the pultrusion and the fiber length of the long reinforcing fiber can be appropriately changed depending on the length of the cut long reinforcing fiber, the upper limit of the fiber length of the long reinforcing fiber is not particularly limited. Further, even if the fiber length of the long reinforcing fiber is large, the long reinforcing fibers can be prevented from easily being cut or tangled with each other, by impregnating the long reinforcing fiber with a composition containing the components other than the long reinforcing fiber. Furthermore, with the pultrusion, the resin molded body can be molded even if the compounding ratio of the long reinforcing fiber is increased.

It is preferable that the long reinforcing fiber is a fiber obtained by drawing monofilaments into roving. The fiber diameter of the monofilament is preferably 1 $\mu$m or more, more preferably 2 $\mu$m or more, and preferably 50 $\mu$m or less, more preferably 40 $\mu$m or less.

The content of the long reinforcing fiber is preferably 40 parts by weight or more, more preferably 50 parts by weight or more, and preferably 380 parts by weight or less, more preferably 300 parts by weight or less, still more preferably 200 parts by weight or less, based on 100 parts by weight of the total of the polyol compound and the isocyanate compound. When the content of the long reinforcing fiber is the above lower limit or more, flexural modulus can be further increased. When the content of the long reinforcing fiber is the above upper limit or less, the portion between the long reinforcing fibers is more likely to be impregnated with a composition (first composition) containing the polyol compound, the isocyanate compound, and the filler, so that the wear resistance and flexural modulus of a resin molded body can be increased.

The volume content of the long reinforcing fiber is preferably 6% by volume or more, more preferably 8% by volume or more, and preferably 25% by volume or less, more preferably 20% by volume or less, in 100% by volume of the resin molded body. When the volume content of the long reinforcing fiber is the above lower limit or more and the above upper limit or less, the flexural modulus of a resin molded body can be further increased.

The volume content of the long reinforcing fiber can be determined in accordance with the firing method described in JIS K 7052.

It is preferable that the long reinforcing fibers are evenly dispersed in the resin molded body. In the curable resin composition according to the present invention, the portion between the long reinforcing fibers is likely to be impregnated with the composition (first composition) containing the polyol compound, the isocyanate compound, and the filler, and the first composition is likely to be held between the long reinforcing fibers. As a result, the long reinforcing fibers are likely to be evenly dispersed in the resin molded body.

[Filler]

A filler is an inactive substance to be dispersed and fed in the resin portion of a resin molded body.

Examples of the filler to be contained in the curable resin composition and the resin molded body include a powder filler. From the viewpoint of further improving the wear resistance of the resin molded body, it is preferable that the filler is a powder filler. The fillers may be used alone or in combination of two or more types.

From the viewpoint of further improving the wear resistance of the resin molded body, it is preferable that the filler is an inorganic powder. The inorganic powders may be used alone or in combination of two types.

Examples of the inorganic powder filler include a carbonate compound, mineral, sulfate compound, silicate compound, clay, nitride, carbon compound, titanium compound, metal borate compound, sulfide, carbide, ash, sand, and volcanic debris. As the inorganic powder filler, only one type of a carbonate compound, mineral, sulfate compound, silicate compound, clay, nitride, carbon compound, titanium compound, metal borate compound, sulfide, carbide, ash, sand, and volcanic debris may be used, or two or more types thereof may be used.

Examples of the carbonate compound include calcium carbonate, magnesium carbonate, zinc carbonate, and barium carbonate. Examples of the mineral include dawsonite, hydrotalcite, mica, imogolite, sericite, and gypsum fiber. Examples of the sulfate compound include calcium sulfate, barium sulfate, and magnesium sulfate. Examples of the silicate compound include calcium silicate. Examples of the clay include talc, clay, montmorillonite, bentonite, activated clay, and sepiolite. Examples of the nitride include aluminum nitride, boron nitride, and silicon nitride. Examples of the carbon compound include carbon black, graphite, carbon balloon, and charcoal powder. Examples of the titanium compound include potassium titanate, and lead zirconate titanate. Examples of the metal borate compound include aluminum borate. Examples of the sulfide include molybdenum sulfide. Examples of the carbide include silicon carbide. Examples of the ash include fly ash, coal ash, and shirasu balloon. Examples of the sand include silica sand. Examples of the volcanic debris include pumice.

It is preferable that the filler is a carbonate compound, mineral, sulfate compound, silicate compound, clay, nitride, carbon compound, titanium compound, metal borate compound, sulfide, carbide, ash, sand, or volcanic debris. It is preferable that the filler contains one or more types of inorganic powders selected from the group consisting of a carbonate compound, mineral, sulfate compound, silicate compound, clay, nitride, carbon compound, titanium compound, metal borate compound, sulfide, carbide, ash, sand, and volcanic debris. In these cases, the flexural modulus of the resin molded body becomes even better.

From the viewpoint of further improving the flexural modulus of the resin molded body, the filler is more preferably fly ash, talc, or calcium carbonate, still more preferably fly ash or calcium carbonate, and particularly preferably fly ash. From the viewpoint of further improving the flexural modulus of the resin molded body, the filler is preferably fly ash type I or fly ash type II.

It is preferable that the fly ash type I and fly ash type II are fly ash conforming to the quality standards of JIS A 6201. Since the fly ash conforming to the above quality standards has a large average circularity, the flexural modulus and wear resistance of the resin molded body can be improved, and formability can also be enhanced.

The fly ash type I is ash having a silicon dioxide content of 45% or more, a 45 $\mu$m sieve residue of 10% or less, and a specific surface area of 5000 $cm^2/g$ or more.

The fly ash type II is ash having a silicon dioxide content of 45% or more, a 45 $\mu$m sieve residue of 40% or less, and a specific surface area of 2500 $cm^2/g$ or more.

Fly ash type IV is ash having a silicon dioxide content of 45% or more, a 45 $\mu$m sieve residue of 70% or less, and a specific surface area of 1500 $cm^2/g$ or more.

The fly ash type IV may have a small average circularity. Therefore, it is preferable in the present invention to use the fly ash type I or fly ash type II rather than the fly ash type IV.

From the viewpoint of improving the wear resistance and flexural modulus of the resin molded body, the specific gravity of the filler should be less than 4. From the viewpoint of further improving the wear resistance of the resin molded body, the specific gravity of the filler is preferably 2 or more, and preferably 3 or less. If the specific gravity of the filler is 4 or more, the fillers are not uniformly dispersed in a resin molded body, so that the wear resistance of the resin molded body is decreased. When the specific gravity of the filler is the above lower limit or more and the above upper limit or less, the fillers are less likely to precipitate, and more likely to be uniformly dispersed in the curable resin composition. As a result, a resin molded body in which the fillers are uniformly dispersed can be preferably obtained.

From the viewpoint of increasing the wear resistance and flexural modulus of the resin molded body, the average circularity of the filler should be 0.65 or more. When the average circularity of the filler is 0.65 or more, stirring resistance, occurring when a liquid containing the filler is mixed, is less likely to rise, so that the viscosity of the liquid containing the filler is less likely to rise. As a result, for example, even when the long reinforcing fiber and the like are impregnated with the liquid containing the fillers, the fillers are likely to be uniformly dispersed between the long reinforcing fibers. On the other hand, if the average circularity of the filler is less than 0.65, stirring resistance, occurring when a curable resin composition is mixed, becomes large due to the shape of the filler, so that the fillers are not uniformly dispersed in the curable resin composition. Therefore, the fillers are less likely to be put between the long reinforcing fibers and lumps of the fillers are partially and unevenly distributed, so that the wear resistance and flexural modulus of a resin molded body are decreased. If the amount of the long reinforcing fibers is reduced, the gaps between the long reinforcing fibers increase, so that the fillers are likely to be put between the long reinforcing fibers, but the flexural modulus of a resin molded body may be decreased.

A filler having a large average circularity can be obtained by sieving. For example, a filler having an average circularity of 0.65 or more can be obtained by sieving the above inorganic powder.

The specific gravity of the filler is less than 4, and the average circularity of the filler is 0.65 or more. Even if the specific gravity of the filler is less than 4, stirring resistance occurs due to the shape of the filler if the average circularity of the filler is less than 0.65, so that the fillers are less likely to be dispersed and the wear resistance and flexural modulus of a resin molded body are likely to be decreased. Additionally, even if the average circularity of the filler is 0.65 or more, the fillers precipitate and are less likely to be uniformly dispersed if the specific gravity of the filler is 4 or more, so that the wear resistance and flexural modulus of a resin molded body are likely to be decreased.

From the viewpoint of further improving the wear resistance and flexural modulus of the resin molded body, the average circularity of the filler is preferably 0.7 or more, more preferably 0.8 or more, and preferably 1 or less. It is more preferable that the average circularity of the filler is closer to 1.

The circularity is a value indicating a degree of circularity, and means that as the circularity gets closer to 1, it gets closer to a circle. The circularity can be calculated by, for example: photographing a filler or a filler contained in a resin molded body with an electron microscope; measuring the projected area (S) and perimeter (L) of the filler from the obtained electron micrograph with the use of commercially available image analysis software; and using the following equation. The average circularity is an average value of the circularities of 100 or more fillers selected arbitrarily. When 100 or more fillers do not exist in the obtained electron micrograph, a new area is photographed with an electron microscope until the number of fillers reaches 100 or more.

$$\text{Circularity} = [4\pi S/L^2]$$

The average equivalent circle diameter of the filler is preferably 1 $\mu$m or more, and preferably 15 $\mu$m or less, more preferably 12 $\mu$m or less, still more preferably 10 $\mu$m or less. When the average equivalent circle diameter of the filler is the above lower limit or more and the above upper limit or less, the fillers are less likely to precipitate, and more likely to be uniformly dispersed in the curable resin composition. As a result, a resin molded body in which the fillers are uniformly dispersed can be preferably obtained, so that the wear resistance and flexural modulus of the resin molded body can be further improved.

The equivalent circle diameter means the diameter of a circle having the same area as the projected area of the filler. The equivalent circle diameter can be calculated by the following equation. The equivalent circle diameter and the projected area of the filler can be calculated by, for example: photographing the filler or the filer contained in the resin molded body with an electron microscope; and analyzing the electron micrograph with the use of commercially available image analysis software. The average equivalent circle diameter is an average value of the equivalent circle diameters of 100 or more fillers selected arbitrarily. An average value of the equivalent circle diameters of 100 or more fillers is determined. When 100 or more fillers do not exist in the obtained electron micrograph, a new area is photographed with an electron microscope until the number of fillers reaches 100 or more.

[Mathematical equation 1]

$$\text{Equivalent circle diameter} = 2 \times \sqrt{S} \div \sqrt{\pi}$$

where S is the projected area of a filler

Fig. 2 is a view showing a filler, a circle having the same area as the projected area of the filler, and an equivalent circle diameter. In Fig. 2, reference numeral 201 represents a filler, reference numeral 202 represents a circle having the same area as the projected area of the filler, and reference numeral 203 represents an equivalent circle diameter. As shown in Fig. 2, the equivalent circle diameter is calculated as the diameter of a circle having the same area as the projected area of the filler.

The content of the filler is preferably 40 parts by weight or more, more preferably 60 parts by weight or more, and preferably 240 parts by weight or less, more preferably 200 parts by weight or less, based on 100 parts by weight of the total of the polyol compound and the isocyanate compound. When the content of the filler is the above lower limit or more, the wear resistance and flexural modulus of the resin molded body can be further improved.

The volume content of the filler in 100% by volume of the resin molded body is preferably 6% by volume or more, more preferably 10% by volume or more, and preferably 30% by volume or less, more preferably 25% by volume or less. When the volume content of the filler is the above lower limit or more and the above upper limit or less, the wear resistance and flexural modulus can be further improved. When the volume content of the filler is the above lower limit or more, the wear resistance can be increased more than the case where the volume content is less than the above lower limit.

The volume content of the filler can be determined in accordance with the firing method described in JIS K 7052.

[Foaming agent]

A foaming agent is a substance that produces a gas upon decomposition or a substance that itself becomes a gas.

From the viewpoint of obtaining a foamed resin molded body, it is preferable that the curable resin composition contains a foaming agent. A foamed resin molded body can be obtained by foaming the curable resin composition with a foaming agent. The foamed resin molded body has the advantage that it is lighter in weight than a non-foamed resin molded body.

Examples of the foaming agent include water, and organic halogen compound. It is preferable that the foaming agent is water, because it is easily available and excellent in convenience. Water acts as a foaming agent by reacting with an isocyanate compound to generate $CO_2$. The foaming agents may be used alone or in combination of two or more types.

Examples of the organic halogen compound include an organochlorine compound, organofluorine compound, organobromine compound, and organoiodine compound. The organic halogen compound may be an organic halogen compound in which all hydrogen atoms are substituted with halogen atoms, or may be an organic halogen compound in which some hydrogen atoms are substituted with halogen atoms. From the viewpoints of improving the foamability during the formation of the resin molded body and keeping the thermal conductivity of the resin molded body low for a longer period of time, it is preferable that the organic halogen compound is an organochlorine compound or an organofluorine compound.

Examples of the organochlorine compound include a saturated organochlorine compound, and unsaturated organochlorine compound. Examples of the saturated organochlorine compound include dichloroethane, propyl chloride, isopropyl chloride, butyl chloride, isobutyl chloride, pentyl chloride, and isopentyl chloride. From the viewpoints of improving the foamability during the formation of the resin molded body and keeping the thermal conductivity of the resin molded body low for a longer period of time, the organochlorine compound is preferably a saturated organochlorine compound, and more preferably a saturated organochlorine compound having 2 to 5 of carbon atoms.

Examples of the organofluorine compound include a saturated organofluorine compound, and unsaturated organofluorine compound.

Examples of the saturated organofluorine compound include hydrofluorocarbon. Examples of the hydrofluorocarbon include difluoromethane (HFC32), 1,1,1,2,2-pentafluoroethane (HFC125), 1,1,1-trifluoroethane (HFC143a), 1,1,2,2-tetrafluoroethane (HFC134), 1,1,1,2-tetrafluoroethane (HFC134a), 1,1-difluoroethane (HFC152a), 1,1,1,2,3,3,3-heptafluoropropane (HFC227ea), 1,1,1,3,3-pentafluoropropane (HFC245fa), 1,1,1,3,3-pentafluorobutane (HFC365mfc), and 1,1,1,2,2,3,4,5,5,5-decafluoropentane (HFC4310mee).

Examples of the unsaturated organofluorine compound include hydrofluoroolefin. Examples of the hydrofluoroolefin include 2,3,3,3-tetrafluoropropene (HFO-1234yf), 1,3,3,3-tetrafluoropropene (HFO-1234ze) (E and Z isomers), and 1,1,1,4,4,4-hexafluoro-2-butene (HFO1336mzz) (E and Z isomers).

Examples of the organofluorine compound also include a compound having a chlorine atom, a fluorine atom, and a double bond. Examples of the compound having a chlorine atom, a fluorine atom, and a double bond include 1,2-dichloro-1,2-difluoroethene (E and Z isomers), and hydrochlorofluoroolefin. Examples of the hydrochlorofluoroolefin include 1-chloro-3,3,3-trifluoropropene (HCFO-1233zd) (E and Z isomers), 1-chloro-2,3,3-trifluoropropene (HCFO-1233yd) (E and Z isomers), 1-(4)chloro-1,3,3-trifluoropropene (HCFO-1233zb) (E and Z isomers), 2-chloro-1,3,3-trifluoropropene (HCFO-1233xe) (E and Z isomers), 2-chloro-2,2,3-trifluoropropene (HCFO-1233xc), 2-chloro-3,3,3-trifluoropropene (HCFO-1233xf), 3-chloro-1,2,3-trifluoropropene (HCFO-1233ye) (E and Z isomers), 3-chloro-1,1,2-trifluoropropene (HCFO-1233yc), 3,3-dichloro-3-fluoropropene, 1,2-dichloro-3,3,3-trifluoropropene (HCFO-1223xd) (E and Z isomers), 2-chloro-1,1,1,4,4,4-hexafluoro-2-butene (E and Z isomers), and 2-chloro-1,1,1,3,4,4,4-heptafluoro-2-butene (E and Z isomers).

From the viewpoints of improving the foamability during the formation of the resin molded body and keeping the thermal conductivity of the resin molded body low for a longer period of time, it is preferable that the organic halogen compound is hydrochlorofluoroolefin, hydrofluorocarbon, or hydrofluoroolefin.

In consideration of foamability, the foaming agent can be used in an appropriate content. The content of the foaming agent (total content when a plurality of foaming agents are used) is preferably 0.05 parts by weight or more, more preferably 0.1 parts by weight or more, and preferably 1.0 part by weight or less, more preferably 0.8 parts by weight or less, based on 100 parts by weight of the polyol compound. When the content of the foaming agent is the above lower limit or more, foaming is promoted, the resin molded body is well formed, and a dimensional defect in the resin molded body is less likely to occur. When the content of the foaming agent is the above upper limit or less, the curable resin composition can be prevented from overflowing from a mold due to excessive foaming.

The expansion ratio of the urethane resin in the resin molded body is preferably 1.1 times or more, more preferably 1.5 times or more, and preferably 5 times or less, more preferably 3 times or less. When the expansion ratio is the above lower limit or less, a lightweight foamed resin molded body can be easily obtained. When the expansion ratio is the above upper limit or less, a foamed resin molded body having a good flexural modulus can be easily obtained.

[Catalyst]

A catalyst is a substance that promotes a chemical reaction.

It is preferable that the curable resin composition contains a catalyst. Examples of the catalyst include a urethanization catalyst, and trimerization catalyst. The catalysts may be used alone or in combination of two types.

It is preferable that the curable resin composition contains a urethanization catalyst. The urethanization catalyst promotes the reaction between the hydroxyl group of the polyol compound and the isocyanate group of the isocyanate compound, and promotes the formation of a urethane bond.

Examples of the urethanization catalyst include: organotin compounds such as dibutyltin dimaleate, dibutyltin dilaurate, and dibutylbis(oleoyloxy)stannane; tertiary amine compounds such as triethylamine, N-methylmorpholine bis(2-dimethylaminoethyl)ether, and N,N,N',N'',N''-pentamethyldiethylenetriamine; N,N,N'-trimethylaminoethyl-ethanolamine; bis(2-dimethylaminoethyl)ether; N-methyl,N'-dimethylaminoethylpiperazine; an imidazole compound in which the secondary amine functional group in the imidazole ring is substituted with a cyanoethyl group; and the like. The urethanization catalysts may be used alone or in combination of two or more types.

The urethanization catalyst can be used in an appropriate content such that the polyol compound and the isocyanate compound react well. The content of the urethanization catalyst is preferably 0.01 parts by weight or more, more preferably 0.02 parts by weight or more, and preferably 1.0 parts by weight or less, more preferably 0.8 parts by weight or less, based on 100 parts by weight of the polyol compound. When the content of the urethanization catalyst is the above lower limit or more, the urethanization reaction effectively proceeds. When the content of the urethanization catalyst is the above upper limit or less, trimerization of the isocyanate group of the isocyanate compound is less likely to be hindered.

The trimerization catalyst promotes a trimerization reaction of the isocyanate group of the isocyanate compound and promotes the formation of an isocyanurate ring. Further, the trimerization catalyst suppresses expansion of the resin molded body during combustion.

Examples of the trimerization catalyst include an aromatic compound, alkali metal salt of carboxylic acids, quaternary ammonium salt of carboxylic acids, and quaternary ammonium salt/ethylene glycol mixture. Examples of the aromatic compound include tris(dimethylaminomethyl)phenol, 2,4-bis(dimethylaminomethyl)phenol, and 2,4,6-tris(dialkylaminoalkyl)hexahydro-S-triazine. Examples of the alkali metal salt of carboxylic acid include potassium acetate, and potassium 2-ethylhexanoate. The trimerization catalysts may be used alone or in combination of two or more types.

The trimerization catalyst can be used in an appropriate content such that the trimerization reaction is well promoted. The content of the trimerization catalyst is preferably 0.01 parts by weight or more, more preferably 0.05 parts by weight or more, and preferably 1.0 part by weight or less, and preferably 0.8 parts by weight or less, based on 100 parts by weight of the polyol compound. When the content of the trimerization catalyst is the above lower limit or more, expansion of the resin molded body, possibly occurring when the resin molded body is formed, can be easily suppressed. When the content of the trimerization catalyst is the above upper limit or less, the formation of a urethane bond is less likely to be hindered.

[Other components]

Note that the curable resin composition may contain a flame retardant, a foam stabilizer, etc., within a range not impairing the objects of the present invention. Each of the flame retardant and the foam stabilizer may be used alone or in combination of two types thereof.

The flame retardant is a substance that, when added to a combustible substance such as, for example, plastic, wood, and fibers, can impart flame retardancy to the combustible substance.

Examples of the flame retardant include a nitrogen-containing non-halogen flame retardant, red phosphorus, phosphate ester, phosphate-containing flame retardant, bromine-containing flame retardant, boron-containing flame retardant, antimony-containing flame retardant, and metal hydroxide.

The foam stabilizer is a substance capable of preventing coarsening and non-uniformity of bubbles and of stably and well forming bubbles.

Examples of the foam stabilizer include polyoxyalkylene foam stabilizers such as polyoxyalkylene alkyl ether, and silicone foam stabilizers such as organopolysiloxane.

The foam stabilizer can be used in an appropriate content such that bubbles are stably and well formed. From the viewpoint of stably and well forming bubbles, the content of the foam stabilizer is preferably 0.01 parts by weight or more, more preferably 0.1 parts by weight or more, still more preferably 0.2 parts by weight or more, and preferably 5 parts by weight or less, more preferably 3 parts by weight or less, still more preferably 1 part by weight or less, based on 100 parts by weight of the polyol compound.

(Other details of curable resin composition)

The curable resin composition can be prepared by mixing the polyol compound, the isocyanate compound, the long reinforcing fiber, the filler, and, if necessary, other components. The method for mixing the respective components is not particularly limited. The curable resin composition may be obtained by preparing a plurality of liquids containing one or more components and mixing the plurality of liquids. The mixing of the plurality of liquids may be performed when the resin molded body is formed. It may be performed that after the filler and the isocyanate compound are mixed into a liquid containing the polyol compound, the long reinforcing fibers are impregnated with the liquid. Alternatively, it may be performed that: the filler is mixed into a liquid containing the polyol compound; the isocyanate compound is then mixed into the liquid; and then the long reinforcing fibers are impregnated with the liquid.

The viscosity at 12°C of the mixed liquid of the polyol compound and the filler is preferably 7,000 cps or more, more preferably 13,000 cps or more, and preferably 60,000 cps or less, more preferably 45,000 cps or less. When the viscosity is the above lower limit or more and the above upper limit or less, the place between the long reinforcing fibers is more likely to be impregnated with the filler in the curable resin composition, so that the flexural modulus and wear resistance of the resin molded body can be improved.

The viscosity at 12°C can be measured by using, for example, a Brookfield viscometer.

(Resin molded body)

A resin molded body can be obtained by molding the curable resin composition according to the present invention. The resin molded body may be a foamed resin molded body. In this resin molded body, the fillers are uniformly dispersed. This resin molded body is excellent in wear resistance and has a high flexural modulus.

The resin molded body can be obtained by, for example, heating the curable resin composition according to the present invention to 40°C to 80°C to be molded and cured.

The wear volume ratio of the resin molded body is preferably 2% or less, more preferably 1% or less, and still more preferably 0.75% or less. If the wear volume ratio of the resin molded body is more than 2%, the resin molded body is easily worn as compared with the case where the wear volume ratio is 2% or less, so when used as a crosstie, the resin molded body may not keep the performance as a crosstie.

The wear volume ratio can be determined as follows.

A specific gravity A of an evaluation sample (before Taber abrasion test) of the resin molded body is calculated by the following equation. The Taber abrasion test is performed on the resin molded body in accordance with JIS K 7204. From the specific gravity A, a weight $W_1$ (g) and a volume $V_1$ ($mm^3$) of the evaluation sample before the Taber abrasion test, and a weight $W_2$ (g) of the evaluation sample after 1,000 times of the Taber abrasion tests, the wear volume ratio is calculated by the following equation.

$$\text{Specific gravity A = weight of evaluation}$$
$$\text{sample/(length of evaluation sample × width of evaluation}$$
$$\text{sample × thickness of evaluation sample)/water density}$$

$$\text{Wear volume ratio (\%) = \{(W_1 - W_2)/A\}/V_1 × 100}$$

Crossties are embedded in, for example, gravel, etc. A crosstie is required to have a high flexural modulus from the viewpoint of reducing an amount of change in bending with respect to the load of a loaded object. A crosstie is also required to have high wear resistance from the viewpoint of preventing wear due to contact with the surrounding stones or gravel. Since the resin molded body has good flexural modulus and wear resistance, it is preferably used as, for example, a crosstie. The curable resin composition is preferably used to obtain crossties.

When the resin molded body is used as a crosstie, etc., it is preferable that the size of the resin molded body is 140 mm × 240 mm × 2600 mm (height (h) × width (w) × length (1)).

The height (h) is preferably 50 mm or more, more preferably 70 mm or more, still more preferably 90 mm or more, and preferably 300 mm or less, more preferably 280 mm or less, still more preferably 260 mm or less.

The width (w) is preferably 50 mm or more, more preferably 100 mm or more, still more preferably 150 mm or more, and preferably 300 mm or less, more preferably 280 mm or less, still more preferably 260 mm or less.

The length (1) is preferably 300 mm or more, more preferably 800 mm or more, still more preferably 1,200 mm or more, and preferably 5,000 mm or less, more preferably 3,800 mm or less, still more preferably 3,500 mm or less.

When the size of the resin molded body is the above lower limit or more and the above upper limit or less, it has a good flexural modulus for a crosstie.

The shape of the crosstie is not particularly limited. For example, the crosstie may have a rectangular parallelepiped shape, or may include a rectangular parallelepiped main body and a protrusion protruding outward from the main body.

The crosstie (resin molded body) may have a length direction and a width direction. From the viewpoint of further improving the flexural modulus of the crosstie, it is preferable that the long reinforcing fibers are arranged along the length direction of the crosstie (resin molded body).

(Method for producing resin molded body (crosstie))

It is preferable that the method for producing the resin molded body according to the present invention includes the steps of: mixing a polyol compound, an isocyanate compound, and a filler to obtain a first composition; impregnating a portion between long reinforcing fibers with the first composition to obtain a curable resin composition; and curing the curable resin composition in a mold.

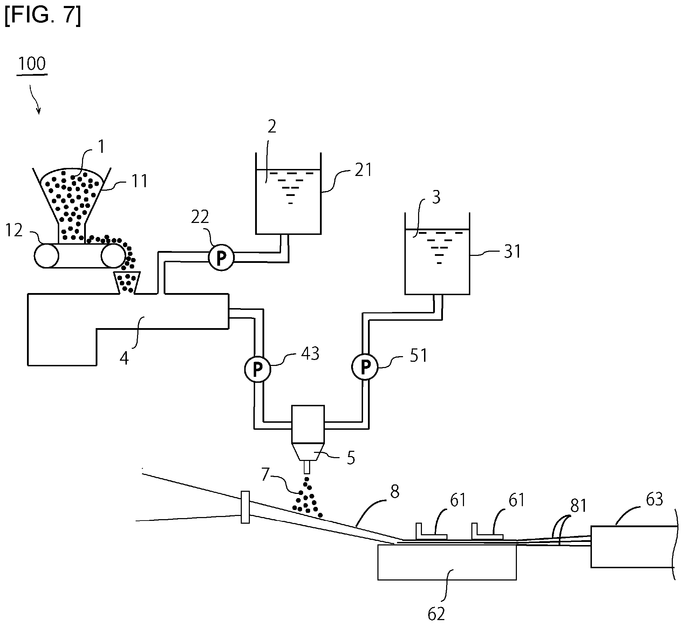

Fig. 7 is a view for explaining the method for producing the resin molded body (crosstie) according to the first embodiment of the present invention.

A production apparatus 100 includes a hopper 11, a belt feeder 12, an extruder 4 with a built-in screw, a pump 43, a first raw material tank 21, a pump 22, a second raw material tank 31, a pump 51, and a mixing sprayer 5, a kneading plate 61, an impregnation plate 62, and a mold 63 having a heating unit.

<Mixing step>

A filler 1 is put into the hopper 11, and then the filler 1 is conveyed by the belt feeder 12 and supplied to the extruder 4. A first raw material 2 is put into the first raw material tank 21 and mixed. The first raw material 2 is a liquid containing a polyol compound and a foaming agent. The first raw material 2 is supplied to the extruder 4 by the pump 22. In the extruder 4, the filler 1 and the first raw material 2 are mixed by the rotation of the screw of the extruder 4, so that a mixed liquid of the filler 1 and the first raw material 2 (hereinafter, it may be described as a "filler and polyol compound-containing composition") is obtained. Note that the first raw material may not contain a foaming agent. Alternatively, the first raw material may contain a catalyst and a foam stabilizer.

Since the average circularity of the filler 1 is 0.65 or more, stirring resistance, possibly occurring when the filler 1 and the first raw material 2 are mixed, can be reduced and the viscosity of the filler and polyol compound-containing composition can be suppressed to be small. As a result, the fillers 1 are likely to be uniformly dispersed in the filler and polyol compound-containing composition.

Since the specific gravity of the filler 1 is less than 4, the difference in specific gravity between the filler 1 and the first raw material 2 is small, so that the filler 1 is less likely to precipitate in the filler and polyol compound-containing composition. As a result, the fillers 1 are likely to be uniformly dispersed in the filler and polyol compound-containing composition.

A second raw material 3 is put into the second raw material tank 31. The second raw material 3 is a polyisocyanate compound.

The filler and polyol compound-containing composition is supplied to the mixing sprayer 5 by the pump 43. The second raw material 3 is supplied to the mixing sprayer 5 by the pump 51. In the mixing sprayer 5, the filler and polyol compound-containing composition and the second raw material 3 are uniformly mixed, and a first composition 7 (a mixed liquid of the polyol compound, the isocyanate compound, the filler, and the foaming agent) is obtained.

Since the fillers 1 are well dispersed in the filler and polyol compound-containing composition, the fillers are also likely to be uniformly dispersed in the first composition 7.

<Impregnating step>

The first composition 7 is sprinkled on a long reinforcing fiber bundle 8, a fiber bundle of the long reinforcing fibers, from the discharge port of the mixing sprayer 5. The long reinforcing fibers are long glass fibers, and the long reinforcing fiber bundle 8 is a long glass fiber bundle.

The first composition 7 and the long reinforcing fiber bundle 8 are kneaded between the kneading plate 61 and the impregnation plate 62, and the portion between the respective long reinforcing fibers constituting the long reinforcing fiber bundle 8 is uniformly impregnated with the first composition 7. In this way, a curable resin composition 81 is obtained.

The average circularity of the filler 1 is 0.65 or more, and the viscosity of the first composition is relatively small, and hence the fillers 1 are likely to be dispersed between the long reinforcing fibers when the long reinforcing fiber bundle 8 is impregnated with the first composition. Therefore, when the first composition 7 and the long reinforcing fiber bundle 8 are kneaded between the kneading plate 61 and the impregnation plate 62, the portion between the long reinforcing fibers is uniformly impregnated with the first composition 7.

Since the specific gravity of the filler 1 is less than 4, the filler 1 is less likely to precipitate in the first composition 7. As a result, the filler 1 is less likely to precipitate even after the portion between the long reinforcing fibers is impregnated with the fillers 1.

<Curing step>

A foamed resin molded body corresponding to the shape of the mold 63 can be produced by transferring the curable resin composition 81 to the mold 63 and by forming and curing the curable resin composition 81 in the mold 63. Note that by sequentially transferring the curable resin composition 81 to the mold 63, a foamed resin molded body can be continuously produced.

As described above, a specific filler is used in the present invention, and hence the fillers 1 can be well dispersed in the curable resin composition 81, so that the fillers 1 can be well dispersed in the obtained resin molded body. Further, in the present invention, the portion between the long reinforcing fibers can be well impregnated with the fillers 1 even if the use amount of the long reinforcing fibers is increased, so that the fillers 1 can be well dispersed in the obtained resin molded body. As a result, the wear resistance and flexural modulus of the obtained resin molded body can be increased.

Further, with the method for producing the resin molded body according to the present invention, a resin molded body having a small variation in flexural modulus can be obtained.

Hereinafter, the present invention will be specifically described by giving Examples and Comparative Examples. The present invention is not limited to the following Examples.

The following materials were provided.

(Polyol compound)

Polyether polyol ("9158" manufactured by Sumika Covestro Urethane Co., Ltd., viscosity at 12°C is 500 cps)

(Isocyanate compound)

Diphenylmethane diisocyanate ("Polymeric MDI" manufactured by Tosoh Corporation, viscosity at 12°C is 200 cps)

The viscosities of the polyol compound and the isocyanate compound at 12°C were measured with a Brookfield viscometer ("Digital Rotary Viscometer" manufactured by Viscotech Co., Ltd.).

(Filler)

Fly ash type I ("Fly ash type I" manufactured by Shikoku Electric Power Company, specific gravity 2.1, average equivalent circle diameter 1.7 μm, average circularity 0.84)

Fly ash type II ("Fly ash type II" manufactured by Shikoku Electric Power Co., Inc., specific gravity 2.1, average equivalent circle diameter 2.7 μm, average circularity 0.82)

Fly ash type IV ("fly ash type IV" manufactured by Shikoku Electric Power Co., Inc., specific gravity 2.1, average equivalent circle diameter 15.8 μm, average circularity 0.63)

Silica sand #7 ("Silica sand #7" manufactured by Mikawa Keiseki Co., Ltd., specific gravity 2.6, average equivalent circle diameter 206.9 μm, average circularity 0.61)

Fine iron powder ("Chromite sand" manufactured by NMC Co., Ltd., specific gravity 4.5, average equivalent circle diameter 146.7 μm, average circularity 0.52)

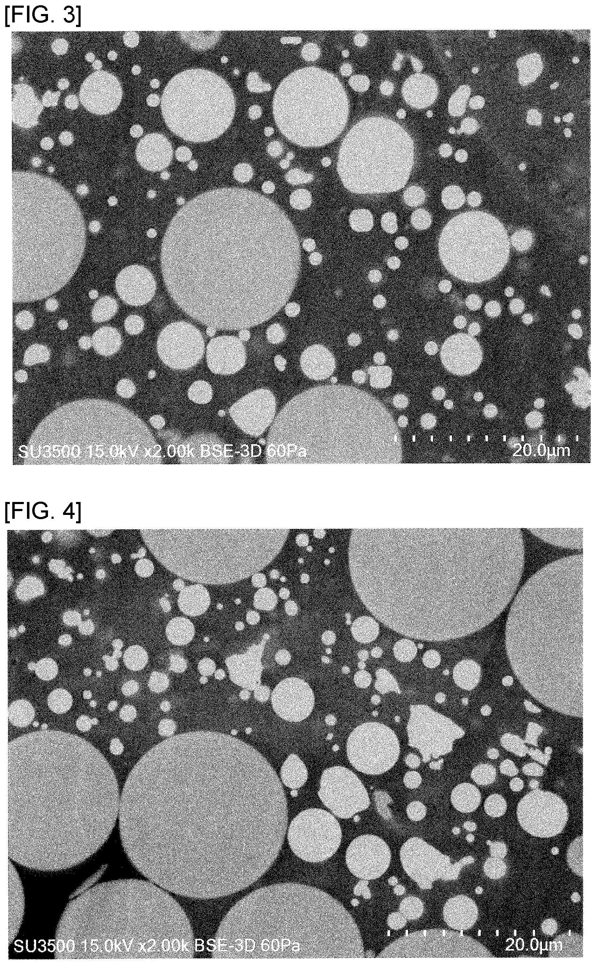

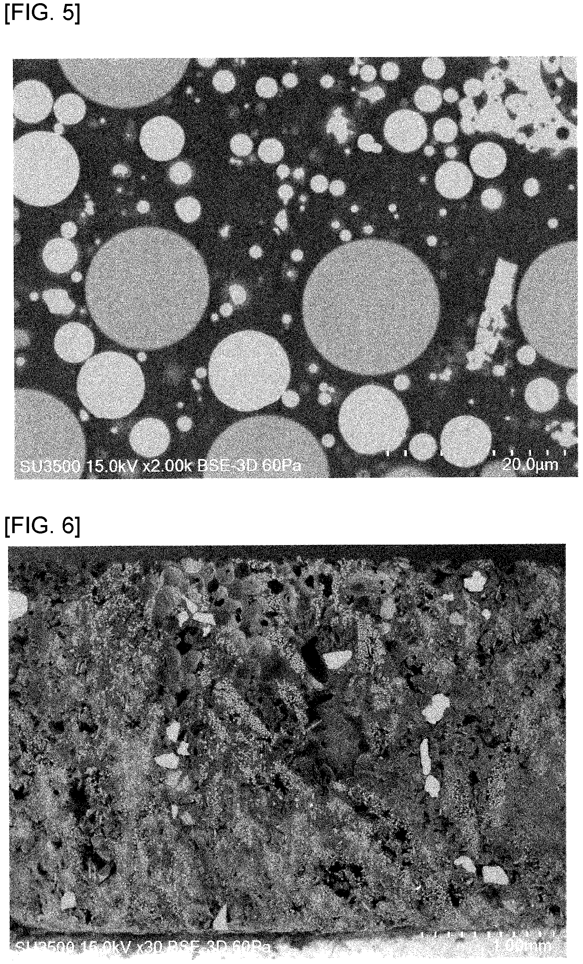

The average circularity and average equivalent circle diameter of the fillers were calculated by cutting a resin molded body, photographing them with a scanning electron microscope, and analyzing 100 or more fillers using the image analysis software WinRoof2015. The obtained electron micrographs are shown in Figs. 3 to 6. Fig. 3 is an electron micrograph of the fly ash type I. Fig. 4 is an electron micrograph of the fly ash type II. Fig. 5 is an electron micrograph of the fly ash type IV. Fig. 6 is an electron micrograph of the silica sand #7.

(Glass fiber)

Long reinforcing fiber:

Long glass fiber (a large number of monofilaments having a fiber diameter of 6 to 20 μm were drawn into roving.)

Fiber different from long reinforcing fiber:

Short glass fiber (a monofilament having a fiber diameter of 6 to 20 μm was cut into fibers having a fiber length of 10 ± 0.2 mm)

(Foaming agent)

Water

(Catalyst)

Dibutyltin dimaleate

Tertiary amine catalyst ("TOYOCAT-DB30" manufactured by Tosoh Corporation)

(Foam stabilizer)

Silicone oil ("SZ-1729" manufactured by Toray Dow Silicone Co., Ltd.)

(Example 1)

A foamed resin molded body was produced by the method shown in Fig. 7.

(Preparation of curable resin composition)

The first raw material shown in Fig. 7 was obtained by mixing the polyol compound, the foaming agent, the catalyst, and the foam stabilizer. A filler and polyol compound-containing composition was obtained by mixing the first raw material and the filler. A first composition was obtained by adding an isocyanate compound as the second raw material to the obtained filler and polyol compound-containing composition and mixing them. A curable resin composition was prepared by impregnating the portion between glass fibers with the obtained first composition. Each component was used in the compounding amount (parts by weight) shown in Table 1 below.

(Production of resin molded body and crosstie)

After being poured into a rectangular tubular mold (50 mm in height × 50 mm in width), the obtained curable resin composition was heated in an oven at 60°C for 50 minutes in order to be foam-molded and cured, thereby obtaining a resin molded body (foamed resin molded body) from the tubular mold. A crosstie having a size of 50 mm in height × 50 mm in width × 390 mm in length was obtained by cutting the resin molded body into pieces having a length of 390 mm.

(Examples 2 to 26 and Comparative Examples 1 to 6)

Curable resin compositions, resin molded bodies, and crossties were obtained in the same way as in Example 1, except that the types and compounding amounts (parts by weight) of the compounding components used were changed as shown in Tables 1 to 4 below.

(Evaluation)

(1) Volume contents of filler and glass fiber

The obtained crosstie were cut into pieces having a size of 10 mm in height × 10 mm in width × 10 mm in thickness. A volume content $V_{filler}$ of the filler and a volume content $V_{fiber}$ of the glass fiber in 100% by volume of the resin molded body were determined by using the cut-out crosstie and in accordance with the firing method described in JIS K 7052.

(2) Expansion ratio of urethane resin

An evaluation sample was obtained by cutting the obtained crosstie into pieces having a size of 10 mm in height × 10 mm in width × 10 mm in thickness. The volume V and weight W of the crosstie were determined by the following equations. Further, the expansion ratio of the urethane resin was determined by using the volume content $V_{filler}$ of the filler, a weight $W_{filler}$ of the filler, the volume content $V_{fiber}$ of the glass fiber, and a weight $W_{fiber}$ of the glass fiber, which were determined by the firing method of JIS K 7052, and by using the following equation.

$$\text{Volume } V = \text{height of the evaluation sample x width of the evaluation sample x thickness of evaluation sample}$$

$$\text{Weight } W = \text{weight of the evaluation sample}$$

$$\text{Expansion ratio} = (V - V_{filler} - V_{fiber})/(W - W_{filler} - W_{fiber})$$

(3) Viscosity of mixed liquid of polyol compound and filler

The polyol compound and the filler were stirred and mixed to obtain a mixed liquid. The compounding ratios of the polyol compound and the filler in the obtained mixed liquid, and the compounding ratios of the polyol compound and the filler contained in the curable resin composition obtained in each of Examples and Comparative Examples were equal to each other. The viscosity at 12°C of the obtained mixed liquid was measured by using a Brookfield viscometer ("Digital Rotary Viscometer" manufactured by Viscotech Co., Ltd.).

(4) Precipitation period

After a mixed liquid was obtained by stirring and mixing the polyol compound and the filler in a 300-mL disposable cup, the mixed liquid was left at rest. The compounding ratios of the polyol compound and the filler in the obtained mixed liquid, and the compounding ratios of the polyol compound and the filler contained in the curable resin composition obtained in each of Examples and Comparative Examples were equal to each other. A period of time (precipitation period) until the mixed liquid was separated into two layers including a layer containing the polyol compound and a layer containing the filler in the 300-mL disposable cup was measured.

(5) Flexural modulus

After being poured into a rectangular tubular mold (36 mm in width × 21 mm in thickness), the obtained curable resin composition was heated in an oven at 60°C for 50 minutes in order to be foam-molded and cured, thereby obtaining a resin molded body (foamed resin molded body) from the tubular mold. A crosstie was obtained by cutting the resin molded body into pieces having a length of 390 mm. The flexural modulus of the obtained crosstie was measured in accordance with JIS E 1203. Note that the flexural modulus was measured, in a temperature-controlled room at 23 ± 5°C, for the samples having the following sample dimensions and under the following measurement conditions.

Sample dimensions: length 390 m ± 2 mm, width 36 mm ± 1 mm, thickness 21 mm ± 1 mm
Distance between fulcrums: 225 mm
Crosshead speed: 2 mm/min

[Determination criteria for flexural modulus]

○○: Flexural modulus is more than 6,100 MPa
○: Flexural modulus is more than 3,500 MPa and 6,100 MPa or less
△: Flexural modulus is more than 3,000 MPa and 3,500 MPa or less
×: Flexural modulus is 3,000 MPa or less

(6) Variation in flexural modulus

A total of 5 crossties were produced. The flexural modulus of each of the obtained crossties was measured in the same way as the sample dimensions and the measurement conditions that were used in (3) Flexural modulus. A variation in flexural modulus was calculated from the obtained flexural moduli.

[Determination criteria for variation in flexural modulus]

○○: Standard deviation is 300 MPa or less
○: Standard deviation is more than 300 MPa and 1300 MPa or less
×: Standard deviation is more than 1300 MPa

(7) Wear volume ratio

A specific gravity A of the obtained crosstie was calculated by the following equation. Additionally, the obtained crosstie was subjected to a Taber abrasion test in accordance with JIS K 7204. From the specific gravity A, a weight $W_1$ (g) and a volume $V_1$ (mm$^3$) of the crosstie before the Taber abrasion test, and a weight $W_2$ (g) of the crosstie after 1000 times of the Taber abrasion tests, a wear volume ratio was calculated by the following equation.

```
Specific gravity A = weight of crosstie/(length of

crosstie × width of crosstie x thickness of crosstie)/water

density
```

```
Wear volume ratio (%) = {(W₁ - W₂)/A}/V₁ × 100
```

[Determination criteria for wear volume ratio]

○○: Wear volume ratio is 1% or less
○: Wear volume ratio is more than 1% and 2% or less
×: Wear volume ratio is more than 2%

The compositions and results are shown in Tables 1 to 4 below.

[Table 1]

| | | | Example 1 | Example 2 | Example 3 | Example 4 | Example 5 | Example 6 | Example 7 | Example 8 |
|---|---|---|---|---|---|---|---|---|---|---|
| Curable resin composition | Polyol compound | Parts by weight | 41.48 | 41.48 | 41.48 | 41.48 | 41.48 | 41.48 | 41.48 | 41.48 |
| | Isocyanate compound | Parts by weight | 58.52 | 58.52 | 58.52 | 58.52 | 58.52 | 58.52 | 58.52 | 58.52 |
| | Filler | Fly ash type I (specific gravity 2.1, average equivalent circle diameter 1.7 $\mu$m, average circularity 0.84) | Parts by weight | 43 | 67 | 150 | 233 | | | | |
| | | Fly ash type II (specific gravity 2.1, average equivalent circle diameter 2.7 $\mu$m average circularity 0.82) | Parts by weight | | | | | 43 | 67 | 150 | 233 |
| | | Fly ash type IV (specific gravity 2.1, average equivalent circle diameter 15.8 $\mu$m, average circularity 0.63) | Parts by weight | | | | | | | | |
| | | silica sand #7 (specific gravity 2.6, average equivalent circle diameter 206.9 $\mu$m, average circularity 0.61) | Parts by weight | | | | | | | | |

| | | | Example 1 | Example 2 | Example 3 | Example 4 | Example 5 | Example 6 | Example 7 | Example 8 |
|---|---|---|---|---|---|---|---|---|---|---|
| | | Fine iron powder (specific gravity 4.5, average equivalent circle diameter 146.7 μm, average circularity 0.52) | Parts by weight | | | | | | | | |
| | Glass fiber | Long glass fiber (fiber length 50 mm or more) | Parts by weight | 41 | 43 | 49 | 56 | 41 | 43 | 49 | 56 |
| | | Short glass fiber (fiber length 10 ± 0.2 mm) | Parts by weight | | | | | | | | |
| | Foaming agent | Water | Parts by weight | 0.12 | 0.12 | 0.12 | 0.12 | 0.12 | 0.12 | 0.12 | 0.12 |
| | Catalyst | Dibutyltin dimaleate | Parts by weight | 0.02 | 0.02 | 0.02 | 0.02 | 0.02 | 0.02 | 0.02 | 0.02 |
| | | Tertiary amine catalyst | Parts by weight | 0.33 | 0.33 | 0.33 | 0.33 | 0.33 | 0.33 | 0.33 | 0.33 |
| | Foam stabilizer | Silicone oil | Parts by weight | 0.25 | 0.25 | 0.25 | 0.25 | 0.25 | 0.25 | 0.25 | 0.25 |
| Resin molded body | Volume content of filler $V_{filler}$ | | Volume% | 8 | 12 | 23 | 31 | 8 | 11 | 22 | 30 |
| | Volume content of glass fiber $V_{fiber}$ | | Volume% | 6 | 6 | 6 | 6 | 6 | 6 | 6 | 6 |
| | Expansion ratio of urethane resin | | Times | 2.63 | 2.63 | 2.63 | 2.63 | 2.63 | 2.63 | 2.63 | 2.63 |
| Viscosity of mixed liquid of polyol compound and filler (12°C) | | | cps | 22255 | 29500 | 51235 | 58480 | 20380 | 27000 | 46860 | 53480 |
| Precipitation period | | | - | 24 hours or more | 24 hours or more | 24 hours or more | 24 hours or more | 24 hours or more | 24 hours or more | 24 hours or more | 24 hours or more |
| Flexural modulus | | | MPa | 4846 | 4944 | 5139 | 4821 | 4943 | 5043 | 5242 | 4821 |
| | | | Determination | ○ | ○ | ○ | ○ | ○ | ○ | ○ | ○ |

(continued)

| | | Example 1 | Example 2 | Example 3 | Example 4 | Example 5 | Example 6 | Example 7 | Example 8 |
|---|---|---|---|---|---|---|---|---|---|
| Variation in flexural modulus (standard deviation) | MPa | 31 | 35 | 42 | 345 | 33 | 37 | 44 | 362 |
| | Determination | ○○ | ○○ | ○○ | ○ | ○○ | ○○ | ○○ | ○ |
| Wear volume ratio | % | 1.69 | 1.65 | 1.31 | 1.15 | 1.71 | 1.67 | 1.32 | 1.16 |
| | Determination | ○ | ○ | ○ | ○ | ○ | ○ | ○ | ○ |

[Table 2]

| | | | Example 9 | Example 10 | Example 11 | Example 12 | Example 13 | Example 14 | Example 15 | Example 16 |
|---|---|---|---|---|---|---|---|---|---|---|
| Curable resin composition | Polyol compound | Parts by weight | 41.48 | 41.48 | 41.48 | 41.48 | 41.48 | 41.48 | 41.48 | 41.48 |
| | Isocyanate compound | Parts by weight | 58.52 | 58.52 | 58.52 | 58.52 | 58.52 | 58.52 | 58.52 | 58.52 |
| | Filler — Fly ash type I (specific gravity 2.1, average equivalent circle diameter 1.7 μm, average circularity 0.84) | Parts by weight | 67 | 67 | 67 | 67 | | | | |
| | Filler — Fly ash type II (specific gravity 2.1, average equivalent circle diameter 2.7 μm average circularity 0.82) | Parts by weight | | | | | 67 | 67 | 67 | 67 |
| | Filler — Fly ash type IV (specific gravity 2.1, average equivalent circle diameter 15.8 μm, average circularity 0.63) | Parts by weight | | | | | | | | |
| | Filler — silica sand #7 (specific gravity 2.6, average equivalent circle diameter 206.9 μm, average circularity 0.61) | Parts by weight | | | | | | | | |

22

(continued)

| | | | Example 9 | Example 10 | Example 11 | Example 12 | Example 13 | Example 14 | Example 15 | Example 16 |
|---|---|---|---|---|---|---|---|---|---|---|
| | Fine iron powder (specific gravity 4.5, average equivalent circle diameter 146.7 μm, average circularity 0.52) | Parts by weight | | | | | | | | |
| Glass fiber | Long glass fiber (fiber length 50 mm or more) | Parts by weight | 43 | 100 | 167 | 222 | 43 | 100 | 167 | 222 |
| | Short glass fiber (fiber length 10 ± 0.2 mm) | Parts by weight | | | | | | | | |
| Foaming agent | Water | Parts by weight | 0.12 | 0.12 | 0.12 | 0.12 | 0.12 | 0.12 | 0.12 | 0.12 |
| Catalyst | Dibutyltin dimaleate | Parts by weight | 0.02 | 0.02 | 0.02 | 0.02 | 0.02 | 0.02 | 0.02 | 0.02 |
| | Tertiary amine catalyst | Parts by weight | 0.33 | 0.33 | 0.33 | 0.33 | 0.33 | 0.33 | 0.33 | 0.33 |
| Foam stabilizer | Silicone oil | Parts by weight | 0.25 | 0.25 | 0.25 | 0.25 | 0.25 | 0.25 | 0.25 | 0.25 |
| Resin molded body | Volume content of filler $V_{filler}$ | Volume% | 11 | 11 | 10 | 9 | 11 | 11 | 10 | 9 |
| | Volume content of glass fiber $V_{fiber}$ | Volume% | 8 | 13 | 20 | 25 | 8 | 13 | 20 | 25 |
| | Expansion ratio of urethane resin | Times | 2.63 | 2.63 | 2.63 | 2.63 | 2.63 | 2.63 | 2.63 | 2.63 |
| | Viscosity of mixed liquid of polyol compound and filler (12°C) | cps | 29500 | 29500 | 29500 | 29500 | 27000 | 27000 | 27000 | 27000 |
| | Precipitation period | - | 24 hours or more | 24 hours or more | 24 hours or more | 24 hours or more | 24 hours or more | 24 hours or more | 24 hours or more | 24 hours or more |
| | Flexural modulus | MPa | 6222 | 9417 | 13888 | 5854 | 6347 | 9605 | 14166 | 5971 |
| | | Determination | ○○ | ○○ | ○○ | ○ | ○○ | ○○ | ○○ | ○ |

23

(continued)

| | | Example 9 | Example 10 | Example 11 | Example 12 | Example 13 | Example 14 | Example 15 | Example 16 |
|---|---|---|---|---|---|---|---|---|---|
| Variation in flexural modulus (standard deviation) | MPa | 56 | 125 | 228 | 615 | 59 | 131 | 239 | 646 |
| | Determination | ○○ | ○○ | ○○ | ○ | ○○ | ○○ | ○○ | ○ |
| Wear volume ratio | % | 1.51 | 0.94 | 0.76 | 0.65 | 1.52 | 0.94 | 0.77 | 0.66 |
| | Determination | ○ | ○○ | ○○ | ○○ | ○ | ○○ | ○○ | ○○ |

[Table 3]

| | | | Example 17 | Example 18 | Example 19 | Example 20 | Example 21 | Example 22 | Example 23 | Example 24 |
|---|---|---|---|---|---|---|---|---|---|---|
| Curable resin composition | Polyol compound | Parts by weight | 41.48 | 41.48 | 41.48 | 41.48 | 41.48 | 41.48 | 41.48 | 41.48 |
| | Isocyanate compound | Parts by weight | 58.52 | 58.52 | 58.52 | 58.52 | 58.52 | 58.52 | 58.52 | 58.52 |
| | Filler | Fly ash type I (specific gravity 2.1, average equivalent circle diameter 1.7 $\mu$m, average circularity 0.84) | Parts by weight | 400 | 25 | 67 | 67 | | | | |
| | | Fly ash type II (specific gravity 2.1, average equivalent circle diameter 2.7 $\mu$m average circularity 0.82) | Parts by weight | | | | | 400 | 25 | 67 | 67 |
| | | Fly ash type IV (specific gravity 2.1, average equivalent circle diameter 15.8 $\mu$m, average circularity 0.63) | Parts by weight | | | | | | | | |
| | | silica sand #7 (specific gravity 2.6, average equivalent circle diameter 206.9 $\mu$m, average circularity 0.61) | Parts by weight | | | | | | | | |

EP 3 851 467 A1

25

| | | | | Example 17 | Example 18 | Example 19 | Example 20 | Example 21 | Example 22 | Example 23 | Example 24 |
|---|---|---|---|---|---|---|---|---|---|---|---|
| | | Fine iron powder (specific gravity 4.5, average equivalent circle diameter 146.7 $\mu$m, average circularity 0.52) | Parts by weight | | | | | | | | |
| | Glass fiber | Long glass fiber (fiber length 50 mm or more) | Parts by weight | 94 | 8 | 21 | 286 | 94 | 8 | 21 | 286 |
| | | Short glass fiber (fiber length 10 ± 0.2 mm) | Parts by weight | | | | | | | | |
| | Foaming agent | Water | Parts by weight | 0.12 | 0.12 | 0.12 | 0.12 | 0.12 | 0.12 | 0.12 | 0.12 |
| | Catalyst | Dibutyltin dimaleate | Parts by weight | 0.02 | 0.02 | 0.02 | 0.02 | 0.02 | 0.02 | 0.02 | 0.02 |
| | | Tertiary amine catalyst | Parts by weight | 0.33 | 0.33 | 0.33 | 0.33 | 0.33 | 0.33 | 0.33 | 0.33 |
| | Foam stabilizer | Silicone oil | Parts by weight | 0.25 | 0.25 | 0.25 | 0.25 | 0.25 | 0.25 | 0.25 | 0.25 |
| Resin molded body | Volume content of filler $V_{filler}$ | | Volume% | 42 | 5 | 12 | 9 | 42 | 5 | 12 | 9 |
| | Volume content of glass fiber $V_{fiber}$ | | Volume% | 8 | 8 | 3 | 30 | 8 | 8 | 3 | 30 |
| | Expansion ratio of urethane resin | | Times | 2.63 | 2.63 | 2.63 | 2.63 | 2.63 | 2.63 | 2.63 | 2.63 |
| Viscosity of mixed liquid of polyol compound and filler (12°C) | | | cps | 65725 | 15010 | 29500 | 29500 | 60100 | 13760 | 27000 | 27000 |
| Precipitation period | | | - | 24 hours or more | 24 hours or more | 24 hours or more | 24 hours or more | 24 hours or more | 24 hours or more | 24 hours or more | 24 hours or more |
| Flexural modulus | | | MPa | 3742 | 6031 | 3028 | 5785 | 3817 | 6092 | 3088 | 5901 |
| | | | Determination | ○ | ○ | Δ | ○ | ○ | ○ | Δ | ○ |

(continued)

| | | Example 17 | Example 18 | Example 19 | Example 20 | Example 21 | Example 22 | Example 23 | Example 24 |
|---|---|---|---|---|---|---|---|---|---|
| Variation in flexural modulus (standard deviation) | MPa | 855 | 46 | 20 | 995 | 898 | 48 | 21 | 1045 |
| | Determination | ○ | ○○ | ○○ | ○ | ○ | ○○ | ○○ | ○ |
| Wear volume ratio | % | 0.82 | 1.70 | 1.92 | 0.59 | 0.83 | 1.72 | 1.94 | 0.60 |
| | Determination | ○○ | ○ | ○ | ○○ | ○○ | ○ | ○ | ○○ |

[Table 4]

| | | Example 25 | Example 26 | Comparative Example 1 | Comparative Example 2 | Comparative Example 3 | Comparative Example 4 | Comparative Example 5 | Comparative Example 6 |
|---|---|---|---|---|---|---|---|---|---|
| Polyol compound | Parts by weight | 41.48 | 41.48 | 41.48 | 41.48 | 41.48 | 41.48 | 41.48 | 41.48 |
| Isocyanate compound | Parts by weight | 58.52 | 58.52 | 58.52 | 58.52 | 58.52 | 58.52 | 58.52 | 58.52 |
| Fly ash type I (specific gravity 2.1, average equivalent circle diameter 1.7 μm, average circularity 0.84) | Parts by weight | 67 | | | | | | 67 | |
| Fly ash type II (specific gravity 2.1, average equivalent circle diameter 2.7 μm average circularity 0.82) | Parts by weight | | 67 | | | | | | 67 |

| | | | | Example 25 | Example 26 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Curable resin compositio n | Filler | Fly ash type IV (specific gravity 2.1, average equivalent circle diameter 15.8 $\mu$m, average circularity 0.63) | Parts by weight | | | 67 | | | | | |
| | | silica sand #7 (specific gravity 2.6, average equivalent circle diameter 206.9 $\mu$m, average circularity 0.61) | Parts by weight | | | | 67 | | | | |
| | | Fine iron powder (specific gravity 4.5, average equivalent circle diameter 146.7 $\mu$m, average circularity 0.52) | Parts by weight | | | | | 67 | | | |

EP 3 851 467 A1

(continued)

| | | | Example 25 | Example 26 | Comparative Example 1 | Comparative Example 2 | Comparative Example 3 | Comparative Example 4 | Comparative Example 5 | Comparative Example 6 |
|---|---|---|---|---|---|---|---|---|---|---|
| Glass fiber | Long glass fiber (fiber length 50 mm or more) | Parts by weight | 104 | 104 | 58 | 58 | 58 | 51 | | |
| | Short glass fiber (fiber length 10 ± 0.2 mm) | Parts by weight | | | | | | | 58 | 58 |
| Foaming agent | Water | Parts by weight | 0.12 | 0.12 | 0.12 | 0.12 | 0.12 | 0.12 | 0.12 | 0.12 |
| Catalyst | Dibutyltin dimaleate | Parts by weight | 0.02 | 0.02 | 0.02 | 0.02 | 0.02 | 0.02 | 0.02 | 0.02 |
| | Tertiary amine catalyst | Parts by weight | 0.33 | 0.33 | 0.33 | 0.33 | 0.33 | 0.33 | 0.33 | 0.33 |
| Foam stabilizer | Silicone oil | Parts by weight | 0.25 | 0.25 | 0.25 | 0.25 | 0.25 | 0.25 | 0.25 | 0.25 |
| Resinmolded body | Volume content of filler $V_{filler}$ | Volume% | 6 | 6 | 11 | 9 | 6 | - | 11 | 11 |
| | Volume content of glass fiber $V_{fiber}$ | Volume% | 8 | 8 | 8 | 8 | 8 | 8 | 8 | 8 |
| | Expansion ratio of urethane resin | Times | 5.00 | 5.00 | 2.63 | 2.63 | 2.63 | 2.63 | 2.63 | 2.63 |
| Viscosity of mixed liquid of polyol compound and filler (12°C) | | cps | 29500 | 27000 | 60000 | 109000 | 50500 | - | 29500 | 27000 |
| Precipitation period | | - | 24 hours or more | 24 hours or more | 12 hours | 0.25 hours | 0.25 hours | - | 24 hours or more | 24 hours or more |
| Flexural modulus | | MPa | 5275 | 5381 | 3111 | 3142 | 3267 | 5839 | 2864 | 2951 |
| | | Determination | ○ | ○ | △ | △ | △ | ○ | × | × |

| | | Example 25 | Example 26 | Comparative Example 1 | Comparative Example 2 | Comparative Example 3 | Comparative Example 4 | Comparative Example 5 | Comparative Example 6 |
|---|---|---|---|---|---|---|---|---|---|
| Variation in flexural modulus (standard deviation) | MPa | 864 | 907 | 1315 | 1421 | 1528 | 25 | 325 | 341 |
| | Determination | ○ | ○ | × | × | × | ○○ | ○ | ○ |
| Wear volume ratio | % | 1. 98 | 2.00 | 2.06 | 2.11 | 2.24 | 2.36 | 1.81 | 1.82 |
| | Determination | ○ | ○ | × | × | × | × | ○ | ○ |

In Examples 1 to 26, a filler having a specific gravity of less than 4 and an average circularity of 0.65 or more was used, and hence the flexural modulus of the obtained crosstie was improved, and the wear resistance was enhanced. On the other hand, in Comparative Examples 1 and 2, a filler having an average circularity of less than 0.65 was used, and hence the flexural modulus and wear resistance of the obtained crosstie were not able to be improved. In Comparative Example 3, a filler having a specific gravity of 4 or more and an average circularity of less than 0.65 was used, and hence the flexural modulus and wear resistance of the obtained crosstie were not able to be improved. In Comparative Example 4, a filler was not used, and hence the wear resistance of the obtained crosstie was not able to be improved. In Comparative Examples 5 and 6, short glass fibers were used, and hence the flexural modulus was inferior to those in Examples 1 to 26.

**EXPLANATION OF SYMBOLS**

1: Filler
2: First raw material
3: Second raw material
4: Extruder
5: Mixing sprayer
7: First composition
8: Long reinforcing fiber bundle
10: Resin molded body
11: Hopper
12: Belt feeder
21: First raw material tank
22: Pump
31: Second raw material tank
43: Pump
51: Pump
61: Kneading plate
62: Impregnation plate
63: Mold
81: Curable resin composition
100: Production apparatus
101: Urethane resin
102: Long reinforcing fiber
103: Filler
201: Filler
202: Circle having the same area as projected area of filler
203: Equivalent circle diameter

**Claims**

1.  A curable resin composition comprising a polyol compound, an isocyanate compound, a long reinforcing fiber, and a filler,
    a specific gravity of the filler being less than 4, and
    an average circularity of the filler being 0.65 or more.

2.  The curable resin composition according to claim 1, wherein an average equivalent circle diameter of the filler is 1 $\mu$m or more and 15 $\mu$m or less.

3.  The curable resin composition according to claim 1 or 2, wherein a content of the filler is 40 parts by weight or more and 240 parts by weight or less, based on 100 parts by weight of a total of the polyol compound and the isocyanate compound.

4.  The curable resin composition according to any one of claims 1 to 3, wherein the filler is fly ash.

**5.** The curable resin composition according to any one of claims 1 to 4, wherein a fiber length of the long reinforcing fiber is 50 mm or more.

**6.** The curable resin composition according to any one of claims 1 to 5, wherein a content of the long reinforcing fiber is 40 parts by weight or more and 380 parts by weight or less, based on 100 parts by weight of a total of the polyol compound and the isocyanate compound.

**7.** The curable resin composition according to any one of claims 1 to 6, wherein the long reinforcing fiber is a long glass fiber.

**8.** The curable resin composition according to any one of claims 1 to 7, wherein the curable resin composition comprises a foaming agent.

**9.** A resin molded body comprising a urethane resin, a long reinforcing fiber, and a filler,
a specific gravity of the filler being less than 4, and
an average circularity of the filler being 0.65 or more.

**10.** The resin molded body according to claim 9, wherein an average equivalent circle diameter of the filler is 1 $\mu$m or more and 15 $\mu$m or less.

**11.** The resin molded body according to claim 9 or 10, wherein the filler is fly ash.

**12.** The resin molded body according to any one of claims 9 to 11, wherein a volume content of the filler is 6% by volume or more and 30% by volume or less in 100% by volume of the resin molded body.

**13.** The resin molded body according to any one of claims 9 to 12, wherein a volume content of the long reinforcing fiber is 6% by volume or more and 25% by volume or less in 100% by volume of the resin molded body.

**14.** The resin molded body according to any one of claims 9 to 13, wherein a fiber length of the long reinforcing fiber is 50 mm or more.

**15.** The resin molded body according to any one of claims 9 to 14, wherein the long reinforcing fiber is a long glass fiber.

**16.** The resin molded body according to any one of claims 9 to 15, wherein an expansion ratio of the urethane resin is 1.1 times or more and 5 times or less.

**17.** The resin molded body according to any one of claims 9 to 16, wherein the resin molded body is a crosstie.

**18.** A method for producing the resin molded body according to any one of claims 9 to 17, the method comprising the steps of:

mixing a polyol compound, an isocyanate compound, and a filler to obtain a first composition;
impregnating a portion between long reinforcing fibers with the first composition to obtain a curable resin composition; and
curing the curable resin composition in a mold,
a specific gravity of the filler being less than 4, and
an average circularity of the filler being 0.65 or more.

**19.** The method according to claim 18, wherein an average equivalent circle diameter of the filler is 1 $\mu$m or more and 15 $\mu$m or less.

**20.** The method according to claim 18 or 19, wherein in the mixing step, the polyol compound, the isocyanate compound, and the filler are mixed such that a content of the filler is set to 40 parts by weight or more and 240 parts by weight or less, based on 100 parts by weight of a total of the polyol compound and the isocyanate compound.

**21.** The method according to any one of claims 18 to 20, wherein the filler is fly ash.

**22.** The method according to any one of claims 18 to 21, wherein a fiber length of the long reinforcing fiber is 50 mm or more.

23. The method according to any one of claims 18 to 22, wherein in the impregnating step, the portion between the long reinforcing fibers is impregnated with the first composition such that a content of the long reinforcing fiber is set to 20 parts by weight or more and 150 parts by weight or less, based on 100 parts by weight of the first composition.

24. The method according to any one of claims 18 to 23, wherein the long reinforcing fiber is a long glass fiber.

25. The method according to any one of claims 18 to 24, wherein
the first composition contains a foaming agent, and
in the curing step, the curable resin composition is foamed and cured in the mold.

26. The method according to any one of claims 18 to 25, wherein the resin molded body obtained is a crosstie.

[FIG. 1.]

10
101 102 103

[FIG. 2.]

203 202 201

[FIG. 3]

[FIG. 4]

[FIG. 5]

[FIG. 6]

[FIG. 7]

# EP 3 851 467 A1

## INTERNATIONAL SEARCH REPORT

| International application No. |
|---|
| PCT/JP2018/034201 |

**A.  CLASSIFICATION OF SUBJECT MATTER**
Int. Cl.  C08G18/00(2006.01)i, C08J5/04(2006.01)i, C08J9/02(2006.01)i,
C08K7/14(2006.01)i, C08K7/18(2006.01)i, C08L75/04(2006.01)i,
E01B3/44(2006.01)i
According to International Patent Classification (IPC) or to both national classification and IPC

**B.  FIELDS SEARCHED**

Minimum documentation searched (classification system followed by classification symbols)
Int. Cl.  C08G18/00-18/87, C08L75/00-75/16, C08K3/00-13/08, C08J5/00-5/24,
C08J9/00-9/42, E01B3/00-3/48

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | JP 2015-152463 A (SEKISUI CHEMICAL CO., LTD.) 24 August 2015, claims 1-3, paragraphs [0035], | 1-7, 9-15, 18-24 |
| Y | [0044], [0045], examples 1-4, table 1 (Family: none) | 8, 16, 17, 25, 26 |
| X | JP 2007-138151 A (ASAHI KASEI CHEMICALS CORP.) 07 June 2007, claim 1, paragraphs [0048], [0081], [0091], [0094], examples 11-15, tables 2, 3 (Family: none) | 1-16 |
| X | JP 2009-242477 A (SEKISUI CHEMICAL CO., LTD.) 22 October 2009, claim 1, paragraphs [0020], [0023], [0029], [0032]-[0036], [0043], [0044], [0046], | 1-3, 5-7, 9, 10, 12-15, 18-20, 22-24 |
| Y | examples 1-6, table 1 (Family: none) | 8, 16, 17, 25, 26 |

☒  Further documents are listed in the continuation of Box C.　　　☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 12.11.2018 | 20.11.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

39

**INTERNATIONAL SEARCH REPORT**

| International application No. |
| --- |
| PCT/JP2018/034201 |

C (Continuation).  DOCUMENTS CONSIDERED TO BE RELEVANT

| Category* | Citation of document, with indication, where appropriate, of the relevant passages | Relevant to claim No. |
| --- | --- | --- |
| X | JP 2012-149237 A (TORAY INDUSTRIES, INC.) 09 August 2012, claims 1, 15, 16, paragraphs [0020], [0057], [0066], [0076], [0097]-[0100], examples 7-9, table 2 (Family: none) | 1-3, 5-7, 9, 10, 12-15 |
| Y | | 8, 16, 17 |
| Y | JP 2000-309062 A (SEKISUI CHEMICAL CO., LTD.) 07 November 2000, claims 1-5, paragraphs [0026]-[0035], examples 1, 2 (Family: none) | 8, 16, 17, 25, 26 |
| A | | 1-7, 9-15, 18-24 |
| Y | US 2015/0267029 A1 (BORAL IP HOLDINGS (AUSTRALIA) PTY LIMITED) 24 September 2015, claims 1, 4, 5, 43, paragraphs [0033]-[0038], [0094], [0113], examples & WO 2014/168633 A1 | 17, 26 |
| A | | 1-16, 18-24, 25 |
| A | JP 2007-523232 A (CENTURY-BOARD USA LLC) 16 August 2007, claims, examples 1-3 & US 2005/0163969 A1 & WO 2005/072188 A2, claims, examples 1-3 & CN 1926282 A & AU 2005208714 A | 1-26 |
| A | JP 2001-500553 A (KATOOT, Mohammad W.) 16 January 2001, claims, examples & WO 1998/011159 A1, claims, examples & AU 4419997 A & CA 2266054 A & KR 10-2000-0036095 A | 1-26 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007014332 A2
- JP 2003041013 A
- JP 2001246632 A